# EUROPEAN PATENT APPLICATION

(11) **EP 3 761 167 A1**
(43) Date of publication of application: **06.01.2021**
(21) Application number: 19183742.6
(22) Date of filing: 01.07.2019
(51) Int. Cl.: G06F 8/65, G06F 11/34, G06F 11/30

(54) **SYSTEM AND METHOD FOR IMPLEMENTING SOFTWARE UPDATES**

(71) Applicant: Computacenter UK Ltd., Hatfield AL10 9TW (GB)
(72) Inventor: The designation of the inventor has not yet been filed
(74) Representative: EIP

(57) **Abstract**

There is disclosed a computer-implemented method of updating a software application within a computing environment comprising a plurality of client devices and a plurality of users. The method comprises, for each user, generating a score based on the extent of use of the software application on one of the plurality of client devices. Test users and corresponding test client devices are then identified using the generated scores, and the software application for the test client devices is updated. The performance of the test client devices is then monitored to identify any impact from the update so that remedial actions can be promptly taken.

## Description

### Technical Field

The present invention relates to updating software applications within an environment in which a plurality of users have access to a plurality of computing devices.

### Background

For many software applications, updates may be issued that modify the software application to improve performance of the software application, for example by addressing security issues and fixing bugs in the coding. For example, updates are released by Microsoft for the Windows 10 operating system at least twice a year.

For enterprises and business, typically IT professionals handle the updating of the software application on multiple computing devices. As the number of computing devices increases, updating the software application while managing the impact that the updating may have on the IT environment becomes increasingly challenging.

### Summary

According to a first aspect of the present invention, there is provided a computer-implemented method of updating a software application within an environment comprising a plurality of client devices and a plurality of users. The method comprises generating a score for each user based on the extent of their use of the software application on one of the plurality of client devices, identifying test users using the generated scores and identifying test client devices associated with the test users, updating the software application for the test client devices, and monitoring performance of the test client devices. In this way, test users can be chosen who regularly use the software application such that the impact of the software application on the computing environment can be quickly and efficiently assessed.

In an example, the generation of the score comprises assigning a first value based on whether the user is active on a specific client device, a second value based on whether the software application is installed on the specific client device, a third value based on the frequency of use of the software application on the specific client device, and then calculating the score based on the summation of the first value, the second value and the third value.

In an example, the method further comprises diagnosing performance issues associated with the updating of the software application, implementing remedial actions to reduce the impact of the diagnosed performance issues within the environment. The updating the software application for the plurality of client devices not associated with test users may be delayed until after the remedial actions have been taken.

Further features and advantages of the invention will become apparent from the following description in which implementations of the invention, given by way of example only, are described with reference to the accompanying drawings.

### Brief Description of the Drawings

Figure 1 schematically shows the main components of a computing environment according to an example of the invention; and
Figure 2 is a flow chart showing operations performed in the updating of a software application in the computing environment of Figure 1.

### Detailed Description

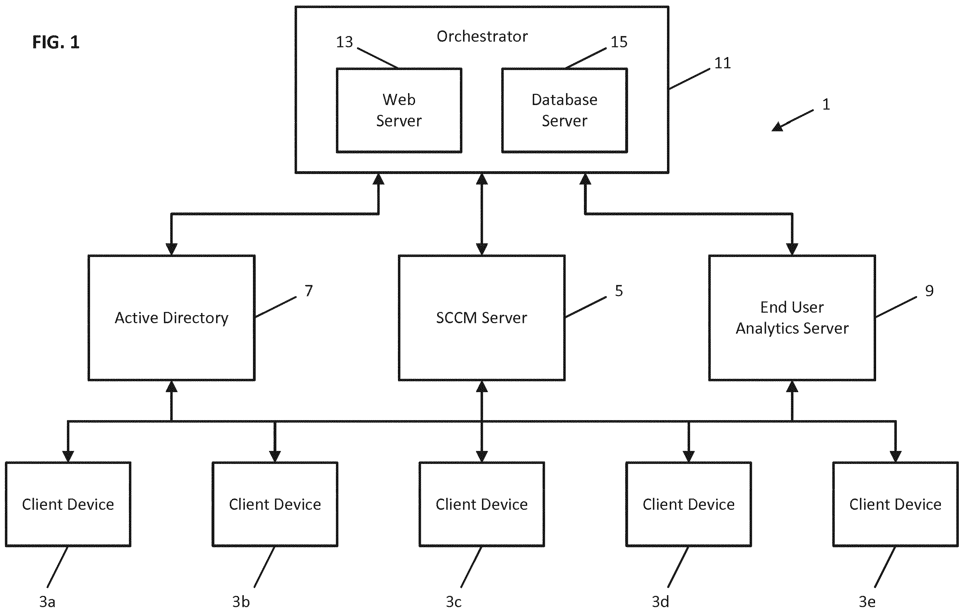

Figure 1 shows a computing environment 1 of a body such as a corporation, a university or any other type of enterprise having multiple client devices 3a-3e (hereafter collectively referred to as client devices 3). A communications network interconnects the client devices 3 with a system center configuration manager (SCCM) server 5, an active directory 7 and an end user analytics server 9. The SCCM server 5, the active directory 7 and the end user analytics server 9 are in turn connected to an orchestrator 11 by the communications network.

The client devices 3 are conventional client devices having an operating system, in this example Windows 10, which enables the client device to execute various software applications. The client devices may be real client devices (i.e. physical devices on which the operating system is executed to control the execution of a software application on the computing resources of the client device) or virtual client devices (i.e. computing devices that emulate the operation of a real client device having the operating system). The software applications on the client devices 3, including the operating system, may be updated.

The SCCM server 5 is also a conventional component which manages large groups of client devices. Typical operations performed by the SCCM server 5 include distributing software applications onto the client devices 3, and deploying updates to the software applications stored by the client devices 3.

The active directory 7 is a conventional directory service that defines a namespace and policies for the computing environment 1. The active directory 7 authenticates and authorizes all users within the computing environment.

The end user analytics server 9 is a conventional product that monitors the performance of the client devices 3.

The orchestrator 11 provides for the configuration, coordination and management of the computing environment 1. In this example, the orchestrator 11 includes novel functionality regarding the deployment of software updates as will be discussed in more detail hereafter. As shown in Figure 1, the orchestrator 11 includes a web server 13 and a database server 15. The web server 13 enables interaction between the orchestrator 11 and the other networked devices within and outside of the computing environment 1. The database server 15 stores data utilised by the orchestrator 11 during its operation. In this example, the database server 15 is an SQL database, although other forms of database could also be used.

As mentioned above, in this example the orchestrator 11 controls the deployment of software updates. In particular, in this example the orchestrator controls the deployment of updates to the Windows 10 operating system on the client devices 3, although it will be understood that if the client devices 3 utilised other operating systems then the same methodology could be used to update those operating systems. Similarly, the same methodology could be used to update other software applications on the client devices 3.

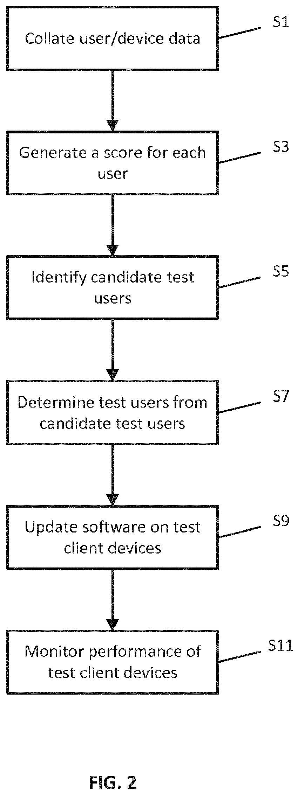

The operations performed by the orchestrator 11 will now be described with reference to the flow chart of Figure 2. As shown, the orchestrator collates, at S1, user and device data. In particular, the orchestrator 11 captures data from the SCCM server 5, the active directory 7 and the end user analytics server 9. The orchestrator the generates, at S3, a score for each user, the score being based on the extent of use of the software application being updated on one of the client devices 3. In this example the following three criteria are taken into account when generating the score for a user:
1. the user being active on a client device 3 to be tested (score 1 if user is a primary user of the client device; otherwise score 0);
2. the software application being installed on that client device 3 (score 1 where the software application is installed on the client device; otherwise score 0); and
3. the number of times the application has been used on the client device 3 over a thirty day period (score 1 for every time the application is opened on the client device over the thirty day period).

The score for the user is then calculated by summing the values for the three criteria.

The orchestrator 11 then identifies, at S5, candidate test users and test client devices associated with the test users based on the generated scores. In this example, the higher the score the more suitable a user is as a test user, although it will be appreciated that alternative scoring schemes could be devised in which the lower the score the more suitable a user is as a test user. Accordingly, what constitutes the best score will depend on the scoring scheme. Potentially, a user could have different generated scores for different client devices 3 where users have access to multiple client devices 3.

In this example, the identification of candidate test users may include criteria in addition to the generated score. For example, within a corporation it may be desirable to identify candidate test users within each organisational department, in which case the users within each organisation department having the best scores are put forward as candidate test users. Alternatively, the identification of the candidate test users may take into account the types of computing resources utilised by the users, such that candidate test users are determined for each type of computing resource. Accordingly, in this example the aim is to identify candidate test users throughout the computing environment covering a range of working profiles, applications and devices.

The orchestrator 11 then determines, at S7, the test users from the candidate test users. In this example, this identification of the test users is based not only on the generated scores, but also on the suitability of each user as a test user. For example, the operator of the computing environment 1 may wish to ring fence certain users from being test users, e,g,:
- users within a specific department or critical area;
- users performing a critical role or activity;
- users with restricted availability;
- users with specific skills or experience relating to an application or testing element; and
- users with particular knowledge relating to application macros, configuration or formulas.

In this example, the candidate test users are displayed to a human operator within the computing environment 1, and the human operator selects the test users from the candidate test users. In particular, the orchestrator 11 presents the following information:
- Primary User
- First Name
- Last Name
- Department
- Location
- Device Name
- Device Key
- Device Make
- Device Model
- Score
- Super User (Selector)

It will, however, be appreciated that alternatively the database server 15 within the orchestrator 11 could have a list of users to be exempted from being test users prestored, so that the selection of the test users from the candidate text users could be performed automatically by the orchestrator 11. In this example, after the test users have been determined, data identifying the test users is stored in the database server 15 for future reference.

The orchestrator 11 then instructs, at S9, the SCCM server 5 to update the software application (e.g. the Windows 10 operating system) on the test client devices associated with the test users. The orchestrator 11 then monitors, at S11, the performance of the test client devices using data provided by, for example, the end user analytics server 9, to identify any impact on performance caused by the update. In this way, the orchestrator 11 can take remedial action (which may or may not require the involvement of a human operator) in a prompt fashion.

In this example, after the performance of the test client devices is deemed satisfactory, the orchestrator 11 instructs the SCCM server 5 to update the software application in the remaining client devices 3.

### Modifications and Further Embodiments

In the above-described example, the software application is first updated on test client devices for the test users, the performance of the test client devices is then monitored, any required remedial action is performed, and then the software application is updated on the remaining client devices. In an alternative example, the software application could be updated in all client devices at the same time. In this example, there is still an advantage to designating test users as only the performance of the test client devices can be monitored to identify the impact of the software update in a more efficient manner than monitoring the performance of all client devices.

As indicated above, different scoring schemes could be used. Alternative scoring schemes may involve more or less criteria, and may involve different mathematical operations on sub-scores associated with different criteria. It is, however, advantageous that any scoring scheme generates a score for a test user in combination with a test client device because this enables both the suitability of the client device and the user to be taken into account when identifying test users.

It will be appreciated that the orchestrator 11 may be in communication with devices outside of the computing environment 1 via the web server 13. This can enable external parties, for example a specialist Information Technology (IT) consultancy to provide technical intelligence regarding software updates and, if necessary, assist in any remedial action.

In the described examples, the novel functionality of the orchestrator is implemented by computer code. As such, the invention extends to the novel computer code as a product, which may be provided stored on a computer-readable medium or downloaded as a signal on a communications network.

## Claims

1. A computer-implemented method of updating a software application within a computing environment comprising a plurality of client devices and a plurality of users, the method comprising:
for each user, generating a score based on the extent of use of the software application on one of the plurality of client devices;
identifying test users and corresponding test client devices using the generated scores;
updating the software application for the test client devices; and.
monitoring performance of the test client devices.

2. A computer-implemented method according to claim 1, wherein the generation of the score comprises:
assigning a first value based on whether the user is active on a specific client device;
assigning a second value based on whether the software application is installed on the specific client device;
assigning a third value based on the frequency of use of the software application on the specific client device; and
calculating the score based on the summation of the first value, the second value and the third value.

3. A computer-implemented method according to claim 1 or 2, wherein the identifying of the test users comprises:
determining candidate test users and corresponding test client devices using the generated scores;
presenting the candidate test users to a human operator; and
receiving selections of the test users from the candidate test users from the human operator.

4. A computer-implemented method according to any preceding claim, further comprising:
diagnosing performance issues associated with the updating of the software application; and
implementing remedial actions to reduce the impact of the diagnosed performance issues within the customer environment.

5. A computer-implemented method according to claim 4, further comprising:
after the implementing of the remedial actions, updating the software application for the remainder of the plurality of client devices.

6. A computer-implemented method according to any preceding claim, wherein the software application is an operating system.

7. A computer-implemented method according to any preceding claim, wherein the plurality of client devices comprises both real devices and virtual devices.

8. An orchestrator for managing a computing environment, the orchestrator comprising one or more processors and memory storing instructions which, when executed by the one or more processors, cause the orchestrator to perform a method as claimed in any preceding claim.

9. A computer program comprising instructions which, when executed by a computer, cause the computer to carry out the method of any of claims 1 to 7.
